# EUROPÄISCHE PATENTSCHRIFT

(11) **EP 2 263 450 B1**
(45) Veröffentlichungstag und Bekanntmachung des Hinweises auf die Patenterteilung: **09.01.2013**
(21) Anmeldenummer: 10005698.5
(22) Anmeldetag: 01.06.2010
(51) Int. Cl.: A01K 5/00

(54) **Futtermischer**
Animal feed mixer
Mélangeur d'aliments pour animaux

(30) Priorität: 15.06.2009 DE 202009008215 U
(43) Veröffentlichungstag der Anmeldung: 22.12.2010
(73) Patentinhaber: Trioliet Holding B.V., 7575 BE Oldenzaal (NL)
(72) Erfinder: Liet, Cornelis, Hendricus, 7581 PJ Losser (NL)
(74) Vertreter: Grünecker, Kinkeldey, Stockmair & Schwanhäusser

(56) Entgegenhaltungen:
- EP-A1- 1 084 612
- DE-U1- 29 806 252

## Beschreibung

Die Erfindung bezieht sich auf einen Futtermischer der im Oberbegriff von Anspruch 1 erläuterten Art.

Ein derartiger Futtermischer ist aus der DE 201 07 602 U1 bekannt. Der bekannte Futtermischer ist als Futtermischwagen ausgebildet und enthält einen Mischbehälter, in dem ein Mischwerkzeug angeordnet ist. Der Mischbehälter ist an seiner nach oben weisenden Seite vollständig offen, so dass er durch diese Öffnung beladen werden kann. Das Mischwerkzeug ist eine Mischschnecke, die mit senkrechter Achse derart rotiert, dass das eingefüllte Futter nach oben gefördert wird und wieder zurück auf den Boden des Behälters fällt. Auf diese Weise wird eine gute Durchmischung und Auflockerung des Futters gewährleistet. Durch die vertikal nach oben gerichtete Förderung durch die Mischschnecke besteht jedoch die Gefahr, dass Futter nach oben aus der Öffnung herausgedrückt wird. Um dies zu verhindern, enthält der bekannte Futtermischer eine Rückhalteeinrichtung, die aus einem losen Ring besteht, der über flexible Halteelemente, wie beispielsweise Ketten, am oberen Rand der Behälterwand so befestigt sind, dass der Ring im unbelasteten Zustand in den Behälter hineinhängt und im Inneren des Behälters die Öffnung verkleinert. Dabei besteht die Gefahr, dass Futter auf der Oberseite des Rings und auf der Oberseite der Ketten liegen bleibt und dann aus dem Behälter gedrückt wird, wenn beim Betrieb der Mischschnecke das Futter nach oben und von unten gegen den Ring gedrückt wird und diesen über den Behälterrand anhebt. Weiterhin kann Futter zwischen Ring und Behälterwand festgepresst werden und den Ring verbiegen.

Es ist weiterhin bekannt, beispielsweise aus der DE 199 02 173 C2, am oberen Behälterrand Aufbauteile vorzusehen, die schwenkbar am Behälterrand befestigt sind. Beim Beladen ragen die Aufbauteile im Wesentlichen waagerecht in die Öffnung hinein und werden durch das vom Mischelement nach oben gedrückte Futter aufgerichtet. Auch hier besteht wieder die Gefahr, dass beim Beladen Futter auf den Aufbauteilen liegen bleibt, das dann beim Aufrichten der Aufbauteile aus dem Behälter herausfällt. Eine klappbare Anordnung ist jedoch notwendig, um insbesondere bei fahrbaren Futtermischern die lichte Höhe, die zum Durchfahren von Toren oder dgl. eingehalten werden muss, nicht zu erhöhen.

Die EP-A-1 084 612 beschreibt einen Futtermischer, dessen Behälter an der oberen freien Öffnung mit einer nach innen weisenden, kegelstumpfförmigen Wand versehen ist. Weder die Konstruktion noch die Funktion dieser kegelstumpfförmigen Wand ist in der Anmeldung erläutert. In den Zeichnungen ist eine starre Wand gezeigt.

Die DE-U-298 06 252 beschreibt einen Futterwagen, der mit einer oberen Rückhalteeinrichtung versehen ist. Die Rückhalteeinrichtung besteht aus einem klappbaren Metallstreifen, der durch das an den Wänden des Futterwagens beim Mischen durch horizontale Mischschnecken nach oben geschobene Material aus seiner Position im Inneren des Behälters nach oben herausklappt. Das Material ist jedoch starr.

Der Erfindung liegt die Aufgabe zugrunde, einen Futtermischer bereitzustellen, der ohne Vergrößerung der Durchfahrthöhe ein Herausfallen des Futters verhindert.

Die Aufgabe wird durch die im Anspruch 1 angegebenen Merkmale gelöst.

Durch die erfindungsgemäße Ausgestaltung wird das Volumen des Mischbehälters nach oben hin vergrößert, ohne dass gleichzeitig die Durchfahrthöhe erhöht wird, da beim Durchfahren besonders niedriger Tore die Rückhaltelippe aus elastischem Material weggedrückt werden kann. Durch die schräge Anordnung besteht weniger die Gefahr, dass beim Beladen Futter auf der Rückhalteeinrichtung liegen bleibt, das später unterwegs verloren geht. Trotzdem bietet die nach oben innen weisende Rückhaltelippe einen ausreichenden aber nachgiebigen Widerstand gegen ein Herausfallen des Futters, wenn dieses durch das Mischwerkzeug nach oben gedrückt wird. Dadurch wird die Gefahr einer Beschädigung der Rückhalteeinrichtung und/oder des Festpressens von Futter stark vermindert. Weiterhin wirkt die Rückhalteeinrichtung auch als Leitfläche, die das nach oben wandernde Futter nach innen unten zurückleitet. Dadurch wird auch die Mischleistung verbessert.

Vorteilhafte Weiterbildungen der Erfindung sind den Unteransprüchen zu entnehmen.

Je nach Form und Neigung der Wandung des Behälters sollte die Rückhaltelippe wenigstens bereichsweise unter einem von 90° abweichenden Winkel zur Vertikalen verlaufen.

Bevorzugt erstreckt sich die Rückhaltelippe ringförmig um den gesamten Rand der Behälterwand herum, kann jedoch auch bereichsweise vorgesehen sein, wenn, beispielsweise durch die Art und Anordnung des Mischwerkzeuges, nicht überall die Gefahr besteht, dass Futter beim Mischen über den Rand gedrückt wird.

Die Herstellung und Befestigung der Rückhaltelippe wird verbessert, wenn diese in mehreren Abschnitten ausgebildet wird, die untereinander mit Bewegungsausgleich verbunden sind.

Die Rückhaltelippe kann jede beliebige Form annehmen, ist jedoch bevorzugt entweder als glatter, ebener Streifen oder als Profilstreifen mit einem eingeformten Profil ausgebildet. Weist der Mischbehälter eine gerundete Öffnung auf, so erleichtert es die Anbringung und die Funktion der Rückhaltelippe, wenn diese zumindest bereichsweise als Teil eines Kegelmantels ausgeformt ist.

Um insbesondere bei langen, geradlinig geführten Randbereichen der Öffnung eine wirksame Unterstützung für die Rückhaltelippe zu erreichen, damit diese nicht in die Öffnung hineinfällt, wird die Rückhaltelippe zumindest bereichsweise durch ein Federelement belastet.

Eine weitere Versteifung der Rückhaltelippe, ohne dass ihre Funktion beeinträchtigt wird, wird erreicht, wenn das freie Ende der Rückhaltelippe mit einer Verstärkungseinrichtung versehen ist.

Die Rückhaltelippe wird bevorzugt über eine Befestigungseinrichtung an der Behälterwand befestigt, wobei die Befestigung bevorzugt lösbar ist, um gegebenenfalls einen Austausch verschlissener Rückhaltelippen zu gestatten.

Die Rückhaltelippe stützt sich bevorzugt auf einer Unterstützungsfläche ab, die einerseits die korrekte Winkelposition der Rückhaltelippe sicherstellt und andererseits für eine gewisse mechanische Festigkeit sorgt.

Ausführungsbeispiele der Erfindung werden nachfolgend anhand der Zeichnungen näher erläutert. Es zeigen:
- Fig. 1: eine perspektivische, schematische Darstellung eines ersten Ausführungsbei- spiels eines erfindungsgemäßen Futtermischers,
- Fig. 2: einen Querschnitt durch den Futtermischer nach Fig. 1,
- Fig. 3: das herausvergrößerte Detail A aus Fig. 2,
- Fig. 4: eine perspektivische, schematische Darstellung eines weiteren Ausführungs- beispiels eines erfindungsgemäßen Futtermischers,
- Fig. 5: den Querschnitt durch den Futtermischer gemäß Fig. 4,
- Fig. 6: das herausvergrößerte Detail B aus Fig. 2,
- Fig. 7: den Schnitt VII-VII aus Fig. 4,
- Fig. 8: den Schnitt VIII-VIII aus Fig. 4,
- Fig. 9: die Ansicht in Richtung des Pfeils IX aus Fig. 4,
- Fig. 10: eine perspektivische, schematische Darstellung eines weiteren Ausführungs- beispiels eines erfindungsgemäßen Futtermischers,
- Fig. 11: einen Querschnitt durch den Futtermischer gemäß Fig. 10, und
- Fig. 12: das herausvergrößerte Detail C aus Fig. 11.

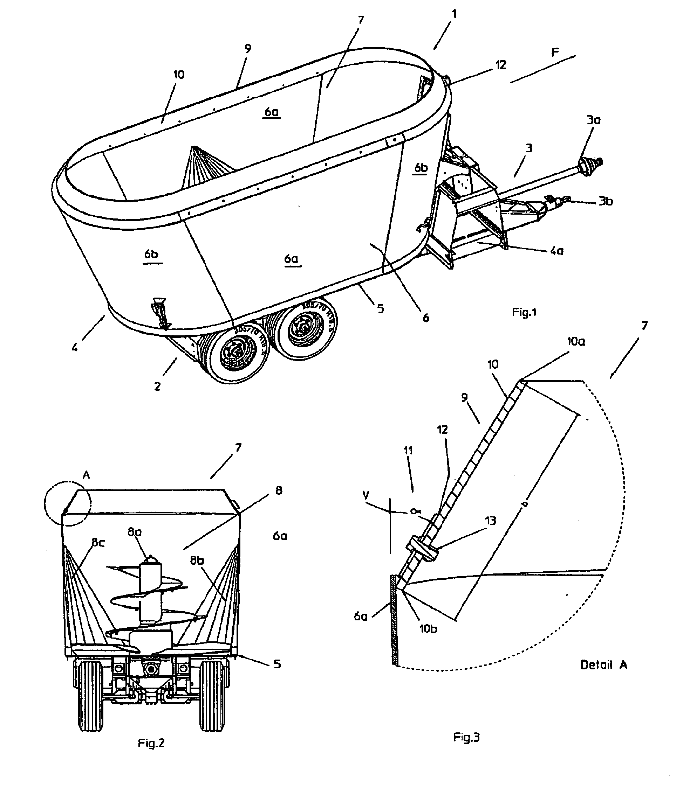

Fig. 1 zeigt in schematischer, perspektivischer Darstellung einen Futtermischer 1, der im dargestellten Ausführungsbeispiel als Futtermischwagen ausgebildet ist und ein Fahrwerk 2 sowie eine Zugeinrichtung 3 mit einer Antriebsübertragung 3a und einer Zugdeichsel 3b zum Anhängen an ein Zugfahrzeug aufweist. Die Erfindung ist jedoch auch auf andere Futtermischer anwendbar.

Der Futtermischer 1 enthält weiterhin einen Mischbehälter 4, der einen Boden 5 und eine sich vom Boden 5 nach oben erstreckende Wandung 6 enthält, die, wie auch Fig. 2 zeigt, in Fahrtrichtung F liegende, seitliche Wandungsteile 6a enthält, die im Wesentlichen senkrecht zum Boden 5 verlaufen. Die quer zur Fahrtrichtung F liegenden Wandteile 6b sind im Wesentlichen halbkreisförmig gekrümmt und verlaufen vertikal oder schräg nach oben außen geneigt zum Boden 5. An der dem Boden 5 abgewandten, oberen Seite ist eine Einfüllöffnung 7 vorgesehen, die sich im Wesentlichen über die gesamte Oberseite des Mischbehälters 4 erstreckt. An der der Zugeinrichtung 3 zugewandten Seite ist ein Austragsförderer 4a vorgesehen.

Im Inneren des Mischbehälters 4 ist eine Mischeinrichtung 8 vorgesehen, die im dargestellten Ausführungsbeispiel zwei Mischschnecken 8a und 8b (nicht dargestellt) enthält, die in Fahrtrichtung F hintereinanderliegend mit im Wesentlichen senkrecht zum Boden 5 verlaufenden Drehachsen angeordnet und durch Leitkörper 8b, 8c, voneinander getrennt sind, die kegelförmig ausgebildet und in den Zwickel zwischen den Arbeitskreisen der beiden Mischschnecken 8a eingreifen. Durch die Mischeinrichtung 8 wird Futter, das über die Öffnung 7 in den Mischbehälter 4 eingefüllt wird, in üblicher Weise vom Boden 5 nach oben in Richtung auf die Öffnung 7 transportiert. Dadurch wird das Futter, insbesondere Halmfutter, aufgelockert und durchmischt.

Um zu verhindern, dass durch die Mischbewegung Futter aus dem Mischbehälter 4 durch die Öffnung 7 nach oben herausgedrückt wird, ist der Öffnung 7 eine Rückhalteeinrichtung 9 zugeordnet. Die Rückhalteeinrichtung 9 enthält eine Rückhaltelippe 10 aus einem elastisch biegbaren Material, bevorzugt einem Gummimaterial oder einem geeigneten Kunststoff. Die Rückhaltelippe 10 ist im Ausführungsbeispiel gemäß den Fig. 1 bis 3 als glatter Streifen ausgebildet und bevorzugt ringförmig rund um die Öffnung 7 am oberen Rand der Behälterwand 6 befestigt. Um die Befestigung, insbesondere an den gekrümmten Stirnseiten 6b der Wand 6 zu erleichtern, kann die Rückhaltelippe 10 als Teil eines Kegel(stumpf)mantels vorgeformt und aufgerollt bereitgestellt werden. Es ist jedoch auch möglich, nur die an den gerundeten Stirnseiten 6b vorzusehende Dichtlippe als Teil eines Kegelmantels auszubilden und die Dichtlippe im Bereich der im Wesentlichen vertikalen, geraden Seiten 6a der Behälterwand 6 als einfache, ebene und gerade Streifen bereitzustellen.

Die Rückhalteeinrichtung 9 enthält weiterhin eine Befestigungseinrichtung 11, mit der die Rückhaltelippe 10 an der Behälterwand 6 befestigt ist. Dabei liegt die Rückhaltelippe 10 an einer Unterstützungsfläche 12 in Form eines Blechstreifens oder dgl. an, die sich im dargestellten Ausführungsbeispiel über etwa das untere Fünftel (Viertel) bis Drittel der Gesamtbreite b der Rückhaltelippe 10 erstreckt. Die Unterstützungsfläche 12 sollte so gewählt werden, dass sich das nach oben weisende freie Ende 10a der Rückhaltelippe 10 frei bewegen kann, während das untere Ende 10b der Rückhaltelippe 10 im Wesentlichen fixiert ist. Die Rückhaltelippe 10 erstreckt sich unter einem Winkel α zur Vertikalen V, die parallel zur Drehachse der Mischschnecke 8a verläuft. Durch diesen Winkel oder durch geeignete andere Maßnahmen wird erreicht, dass sich die Rückhaltelippe 10 nach innen und bevorzugt schräg nach oben innen bezüglich des Mischbehälters 4 erstreckt und über die Öffnung 7 reicht. Dieser Winkel α wird bevorzugt durch die Unterstützungsfläche 12 vorgegeben, die unter dem Winkel α fest mit der Behälterwand 6 verbunden, beispielsweise verschweißt ist. Dieser Winkel liegt bevorzugt zwischen 10° und 50°, insbesondere zwischen 20° und 40°, insbesondere zwischen 25° und 35° und insbesondere bei 30°. Es ist nicht unbedingt notwendig, dass der Winkel α über den gesamten Rand der Öffnung 7 gleich bleibt, so kann beispielsweise der Winkel im Bereich der geraden, vertikalen Seiten 6a vom Winkel im Bereich der gekrümmten und schräg verlaufenden Stirnseiten 6b abweichen.

Die Unterstützungsfläche 12 ist bevorzugt als Teil der Befestigungseinrichtung 11 ausgebildet und enthält beispielsweise einen mit einem Kopf versehenen Stift 13, auf dem die Rückhaltelippe 10 auswechselbar aufgeknöpft ist. Andere lösbare oder permanente Befestigungsmöglichkeiten für die Rückhaltelippen 10 sind jedoch auch möglich.

Die Rückhaltelippe 10 kann wegen ihrer elastisch nachgiebig biegbaren Ausgestaltung permanent über den oberen Rand der Behälterwand 6 vorstehen und wird beim Durchfahren niedrigerer Toröffnungen einfach weggedrückt. Durch die Schrägstellung kann Futter, das beim Einfüllen danebenfällt, bereits an der Einfüllstelle abrutschen und kann dort wieder dem Vorrat zugeführt werden. Beim Verfahren des Futtermischers 1 wird somit die Verfahrstraße saubergehalten. Wird Futter durch die Mischeinrichtung 8 nach oben in Richtung auf die Öffnung 7 gedrückt, so wird es durch die Rückhalteeinrichtung 10 nach oben innen umgeleitet und gelangt wieder in den Mischbehälter 4. Weiterhin kann die Rückhaltelippe 10 elastisch nach außen ausweichen, falls der Druck des Futters zu stark wird, ohne dass Futter zwischen der Mischschnecke und der Rückhaltelippe 10 festgepresst wird.

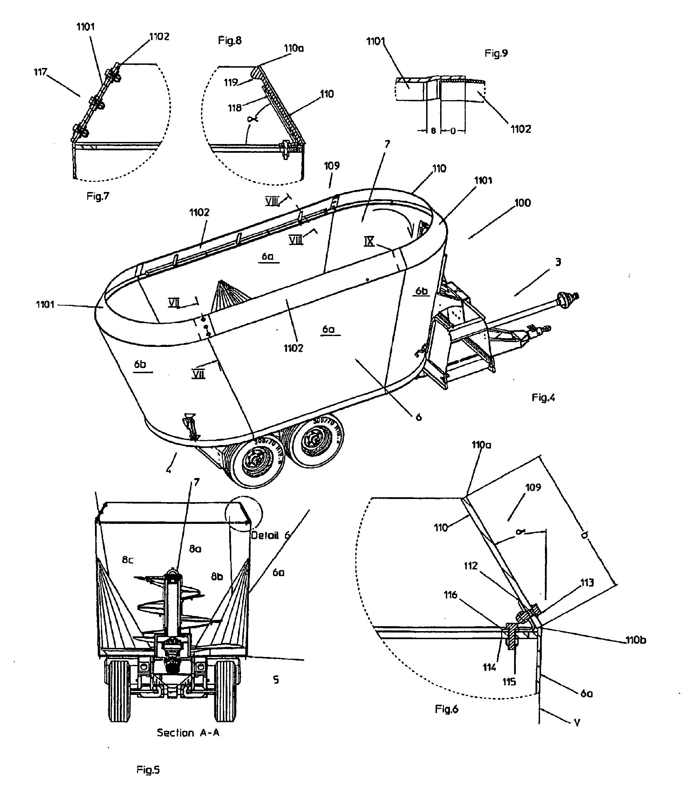

In den Fig. 4 bis 6 wird ein weiteres Ausführungsbeispiel eines erfindungsgemäßen Futtermischers 100 beschrieben, das sich vom Futtermischer 1 nur durch eine abgewandelte Rückhalteeinrichtung 109 unterscheidet. Die übrigen Bestandteile entsprechen herkömmlichen Futtermischern, wobei die dem ersten Ausführungsbeispiel entsprechenden Teile mit den gleichen Bezugszeichen gekennzeichnet und nicht nochmals erläutert sind.

Die Rückhalteeinrichtung 109 des Futtermischers 100 enthält wiederum eine Rückhaltelippe 110, die als ebener, glatter und bevorzugt als Teil eines Kegelmantels ausgebildeter Streifen aus einem elastisch biegbaren Material besteht. Die Unterschiede zum ersten Ausführungsbeispiel liegen in der Befestigungseinrichtung 111, die hier einen Befestigungsflansch 114 enthält, der sich rund um die Öffnung 7 erstreckt oder auch nur bereichsweise vorgesehen sein kann. Der Befestigungsflansch 114 steht im Wesentlichen horizontal von der Wand 6 vor und ist bevorzugt an dieser angeschweißt. Auf dem Befestigungsflansch 114 ist mit Hilfe von Befestigungselementen 115 eine Winkelschiene 116 befestigt, die mit der Unterstützungsfläche 112 versehen ist. Auch die Unterstützungsfläche 112 erstreckt sich zwischen einem Fünftel und einem Drittel der Breite b der Rückhaltelippe 110 und unterstützt das untere Ende 110b der Rückhaltelippe 110 im vorbestimmten Winkel α. Auch die Rückhaltelippe 110 ist mit Hilfe von Kopfbolzen 113 lösbar angeknöpft.

Die Fig. 7 bis 9 sind zwar auf das Ausführungsbeispiel gemäß Fig. 4 bezogen, die darin beschriebenen Ausgestaltungen können jedoch bei allen Ausführungsformen vorgesehen sein.

Wie die Fig. 7 und 9 zeigen, kann die Rückhaltelippe 110 aus mehreren Abschnitten 1101 und 1102 bestehen, wobei im dargestellten Ausführungsbeispiel die Abschnitte entsprechend des Verlaufes des Randes der Öffnung 7 ausgewählt werden. So weisen beispielsweise die den gekrümmten Wandungsbereichen 6b zugeordneten Abschnitte 1101 der Rückhaltelippe 110 eine Kegelmantelform auf, während die den geradlinigen Wandungsbereichen 6a zugeordneten Abschnitte 1102 als gerade Streifen ausgebildet sind. Die einzelnen Abschnitte 1101 und 1102 sind in Drehrichtung des Mischwerkzeuges 8a überlappend angeordnet, so dass durch die Drehung kein Futter zwischen die Abschnitte eingedrückt wird. Die Befestigung der beiden Abschnitte aneinander erfolgt über Bewegungsausgleichsmittel, die eine Relativbewegung der Abschnitte zueinander beim Aufstellen der Rückhaltelippe durch Druck des von unten angedrückten Futters oder beim Absenken der Rückhaltelippe, beispielsweise bei Durchfahrt eines niedrigen Torbogens gestatten. Die Bewegungsausgleichsmittel können entweder durch eine einfache, genügend lange Überlappung Ü (Fig. 9) gebildet werden, wobei der außenliegende Abschnitt 1101 über die Dicke des innenliegenden Abschnittes 1102 ausgelenkt ist, so dass beide Abschnitte 1101 und 1102 bis auf einen geringen Bereich B im Anschluss an die Überlappung Ü fluchtend miteinander ausgerichtet sind.

Die Bewegungsausgleichsmittel können auch, wie Fig. 7 zeigt, durch Befestigungsmittel 117 gebildet werden, die aus Schrauben, Steckverbindungen oder Buchsen oder dgl. bestehen, die in Langlöcher, entweder nur in einem Abschnitt oder in beiden Abschnitten eingreifen. Die Langlöcher erstrecken sich in Richtung parallel zum Rand der Öffnung 7, so dass sich die beiden einander anliegenden und überlappenden Abschnitte 1101 und 1102 relativ zueinander bewegen können.

Die Rückhaltelippe 110 kann, besonders an Stellen, an denen die Verformungskräfte durch eine kegelmantelförmige Ausgestaltung nicht ausreichen, oder in geraden Bereichen der Öffnung 7 durch ein Federelement 118 unterstützt sein. Das Federelement 118 steht mit der Rückhaltelippe 110 derart in Verbindung, dass es die Rückhaltelippe 110 daran hindert, mit ihrem freien Ende 110a in die Öffnung hineinzufallen; d.h. durch das Federelement 118 wird der Winkel α im Wesentlichen aufrechterhalten, auch wenn die Eigenspannung der Rückhaltelippe dafür nicht ausreicht. Zu diesem Zweck ist im dargestellten Ausführungsbeispiel das Federelement 118 an der Innenseite der Rückhaltelippe 110 angeordnet und liegt lose an der Rückhaltelippe 110 an. Im dargestellten Ausführungsbeispiel enthält das Federelement 118 eine Vielzahl von streifenförmigen Blattfedern, die sich vom Befestigungsflansch 114 unter dem Winkel α nach oben erstrecken, und zwar über im Wesentlichen ¾ bis die gesamte Breite b der Rückhaltelippe 110. Da die Federelemente 118 in gleicher Weise elastisch ausweichen können, wie dies die Rückhaltelippe 110 kann, wird dadurch die Funktion nicht beeinträchtigt. Statt der Blattfedern können andere Federelemente, wie beispielsweise Spiralfedern oder dgl. vorgesehen sein. Auch eine Aufhängung der Rückhaltelippe durch außen angebrachte Federelemente ist möglich.

Eine weitere Versteifung der Rückhaltelippe 110 kann durch Versteifungselemente 119 erreicht werden, die sich bevorzugt im Bereich des freien Endes 110a der Rückhaltelippe 110 befinden. Die Versteifung kann innen und/oder außen an der Rückhaltelippe 110, bezogen auf die Öffnung 7, vorgesehen sein. Die Verstärkungseinrichtung können beispielsweise Verdickungen der Rückhaltelippe 110, ein profilierter Rand (Wellen), Kordeinlagen, Seileinlagen oder ein elastischer Gurt, ein Kabel oder dgl. Es ist weiterhin möglich, die Versteifungselemente nachstellbar auszubilden, um die Spannung am freien Rand 110A variieren zu können, z. B. indem man geeignete Versteifungselemente, wie z. B. einen Gurt oder ein Kabel, lose in Ringen am freien Rand 110A führt und ihre Länge durch geeignete Spannelemente veränderbar gestaltet.

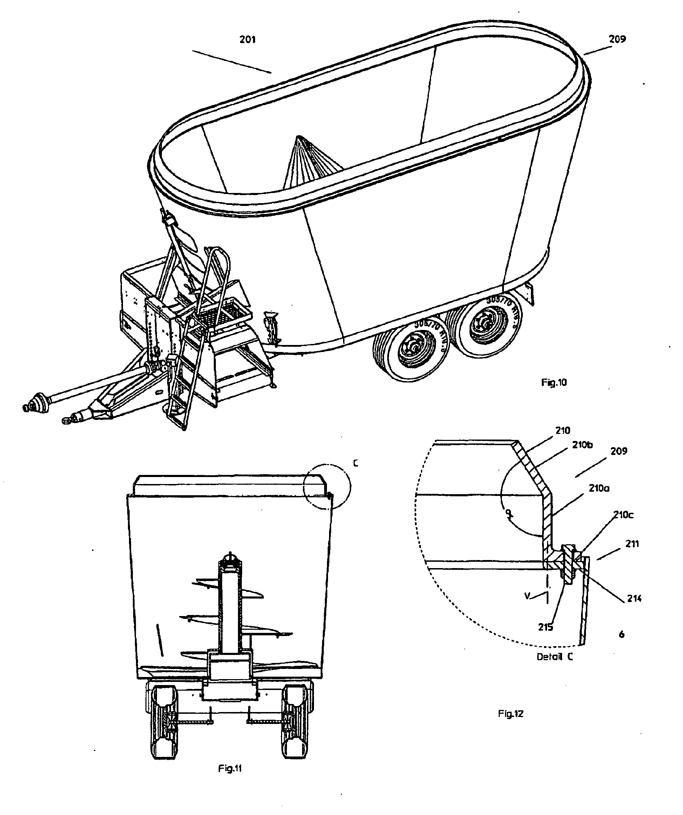

Aus den Fig. 10 bis 12 ist ein weiteres Ausführungsbeispiel eines erfindungsgemäßen Futtermischers 201 ersichtlich, der bis auf die Rückhalteeinrichtung 209 herkömmlich ausgebildet ist und beispielsweise den vorangegangenen Ausführungsbeispielen entspricht. Wie insbesondere Fig. 9 zeigt, enthält die Rückhalteeinrichtung 209 eine abgewandelte Rückhaltelippe 210, die hier als Profilstreifen ausgebildet ist, der einen zylindrischen Bereich 210a aufweist, der sich im Wesentlichen vertikal erstreckt. An das obere Ende des zylindrischen Bereiches 210a schließt sich ein schräg verlaufender, bevorzugt kegelmantelförmiger Bereich 210b an, der mit dem zylindrischen Bereich 210a den Winkel α einschließt. Die Rückhaltelippe 210 weist an ihrem unteren Ende einen Befestigungsflansch 210c auf, mit der sie auf einem Befestigungsflansch 214 mittels Befestigungselementen 215 befestigt ist. Der Befestigungsflansch 214 ist bevorzugt an der Behälterwand 6, bevorzugt rund um die Öffnung 7, befestigt, beispielsweise durch Verschweißen, und erstreckt sich im Wesentlichen horizontal.

In Abwandlung der beschriebenen und gezeichneten Ausführungsbeispiele kann die Erfindung bei Futtermischern aller Art und mit den unterschiedlichsten Mischeinrichtungen versehen, eingesetzt werden. Die Ausführung und/oder Ausgestaltung der Rückhaltelippe kann an die entsprechenden Formen der Behälteröffnung oder der Behälterwandneigung oder der Behälterwandkrümmung angepasst werden. Die anhand der einzelnen Ausführungsbeispiele gezeigten Einzelheiten können untereinander ausgetauscht werden. Ein an der Rückhaltelippe angeformter Befestigungsflansch kann weiterhin auch bei den Ausführungsbeispielen der Fig. 1 bis 6 vorgesehen sein. Weiterhin kann es unter Umständen ausreichen, die Rückhaltelippe nur im Bereich ihrer freien oberen Kante elastisch nachgiebig auszubilden, was sich beispielsweise beim Ausführungsbeispiel nach Fig. 12 anbietet.

## Patentansprüche

1. Futtermischer (1, 101, 201), mit einem Mischbehälter (4), der eine Behälterwand (6) mit einer von einem Rand begrenzten Öffnung (7) enthält, wobei der Öffnung (7) eine Rückhalteeinrichtung (9, 109, 209) zugeordnet ist, **dadurch gekennzeichnet, dass** die Rückhalteeinrichtung (9, 109, 209) eine Rückhaltelippe (10, 110, 210) aus einem elastisch nachgiebigen Material aufweist, die zumindest bereichsweise nach innen verläuft und über die Öffnung (7) vorsteht.

2. Futtermischer nach Anspruch 1, **dadurch gekennzeichnet, dass** die Rückhaltelippe (9, 109, 209) wenigstens bereichsweise unter einem Winkel (a) zwischen 10° und 50°, bevorzugt 20° und 40°, bevorzugt 25° bis 35°, und insbesondere 30° zur Vertikalen (V) verläuft.

3. Futtermischer nach Anspruch 1 oder 2, **dadurch gekennzeichnet, dass** sich die Rückhaltelippe (10, 110, 210) ringförmig um die Öffnung (7) erstreckt.

4. Futtermischer nach einem der Ansprüche 1 bis 3, **dadurch gekennzeichnet, dass** die Rückhaltelippe (10, 110, 210) mehrere Abschnitte (1101, 1102) enthält, die über Bewegungsausgleichsmittel (Ü, 117) miteinander verbunden sind.

5. Futtermischer nach einem der Ansprüche 1 bis 4, **dadurch gekennzeichnet, dass** die Rückhaltelippe (10, 110) als glatter Streifen ausgebildet ist.

6. Futtermischer nach einem der Ansprüche 1 bis 5, **dadurch gekennzeichnet, dass** die Rückhaltelippe (210) als Profilstreifen ausgebildet ist.

7. Futtermischer nach einem der Ansprüche 1 bis 6, **dadurch gekennzeichnet, dass** die Rückhaltelippe (10, 110, 210) zumindest bereichsweise als Teil eines Kegelmantels ausgeformt ist.

8. Futtermischer nach einem der Ansprüche 1 bis 7, **dadurch gekennzeichnet, dass** die Rückhaltelippe (210) als Profilstreifen mit einem ersten zylindrischen Bereich (210a) und einem zweiten als Teil eines Kegelmantels ausgeformten Bereich (210b) ausgebildet ist.

9. Futtermischer nach einem der Ansprüche 1 bis 8, **dadurch gekennzeichnet, dass** die Rückhaltelippe (10, 110, 210) zumindest bereichsweise durch ein Federelement (118) unterstützt ist.

10. Futtermischer nach einem der Ansprüche 1 bis 8, **dadurch gekennzeichnet, dass** die Rückhaltelippe (10, 110, 210) im Bereich ihres freien Endes (110a) mit einer Verstärkungseinrichtung (119) versehen ist.

11. Futtermischer nach einem der Ansprüche 1 bis 10, **dadurch gekennzeichnet, dass** die Rückhalteeinrichtung (9, 109, 209) eine Befestigungseinrichtung (11, 111, 211) zum Anbringen der Rückhaltelippe (10, 110, 210) an der Behälterwand (6) aufweist.

12. Futtermischer nach Anspruch 11; **dadurch gekennzeichnet, dass** die Befestigungseinrichtung (11, 111, 211) für eine lösbare Anordnung der Rückhaltelippe (10, 110, 210) ausgebildet ist.

13. Futtermischer nach Anspruch 11 oder 12, **dadurch gekennzeichnet, dass** die Befestigungseinrichtung eine Knöpfeinrichtung (13, 113) zum Anknöpfen der Rückhaltelippe (10, 110) aufweist.

14. Futtermischer nach einem der Ansprüche 1 bis 12, **dadurch gekennzeichnet, dass** eine an einer Seite der Rückhaltelippe (10, 110, 210) anliegende Unterstützungsfläche (12, 112) vorgesehen ist.

15. Futtermischer nach Anspruch 13 oder 14, **dadurch gekennzeichnet, dass** die Unterstützungsfläche (12, 112) unter einem Winkel (α) zur Vertikalen (V) verläuft.

## Claims

1. A feed mixer (1, 101, 210) with a mixing container (4) comprising a container wall (6) with an opening (7) delimited by an edge, said opening (7) having associated therewith a retaining means (9, 109, 209), **characterized in that** the retaining means (9, 109, 209) includes a retaining lip (10, 110, 210) consisting of an elastically flexible material extending, at least in certain sections thereof, inwards and projecting beyond the opening (7).

2. A feed mixer according to claim 1, **characterized in that** the retaining lip (10, 110, 210) extends, at least in certain sections thereof, at an angle (α) between 10° and 50°, in particular 20° and 40°, in particular 25° and 35°, and in particular 30° relative to the vertical (V).

3. A feed mixer according to claim 1 or 2, **characterized in that** the retaining lip (10, 110, 210) extends annularly around the opening (7).

4. A feed mixer according to claims 1 to 3, **characterized in that** the retaining lip (10, 110, 210) comprises a plurality of sections (1101, 1102) connected to one another via motion compensating means (Ü, 117).

5. A feed mixer according to one of the claims 1 to 4, **characterized in that** the retaining lip (10, 110) is configured as a plain strip.

6. A feed mixer according to one of the claims 1 to 5, **characterized in that** the retaining lip (210) is configured as a profile strip.

7. A feed mixer according to one of the claims 1 to 6, **characterized in that** the retaining lip (10, 110, 210) is, at least in certain sections thereof, configured as part of an envelope of a cone.

8. A feed mixer according to one of the claims 1 to 7, **characterized in that** the retaining lip (210) is configured as a profile strip comprising a first, cylindrical area (210a) and a second area (210b) configured as part of an envelope of a cone.

9. A feed mixer according to one of the claims 1 to 8, **characterized in that** the retaining lip (10, 110, 210) is, at least in certain areas thereof, supported by a spring element (118).

10. A feed mixer according to one of the claims 1 to 8, **characterized in that** the retaining lip (10, 110, 210) is provided with a reinforcing means (119) in the area of its free end (110a).

11. A feed mixer according to one of the claims 1 to 10, **characterized in that** the retaining means (9, 109, 209) includes a fastening means (11, 111, 211) for attaching the retaining lip (10, 110, 210) to the container wall (6).

12. A feed mixer according to claim 11, **characterized in that** the fastening means (11, 111, 211) is configured for releasably attaching the retaining lip (10, 110, 210).

13. A feed mixer according to claim 11 or 12, **characterized in that** the fastening means is provided with a buttoning means (13, 113) for attaching the retaining lip (10, 110).

14. A feed mixer according to one of the claims 1 to 12, **characterized in that** a support surface (12, 112) is provided, which abuts on one side of the retaining lip (10, 110, 210).

15. A feed mixer according to claim 13 or 14, **characterized in that** the support surface (12, 112) extends at an angle (α) relative to the vertical (V).

## Revendications

1. Mélangeur d'aliments pour animaux (1, 101, 201) avec un conteneur de mélange (4) qui comporte une paroi de conteneur (6) avec une ouverture (7) délimitée par un bord, étant précisé qu'un dispositif de retenue (9, 109, 209) est associé à l'ouverture (7), **caractérisé en ce que** le dispositif de retenue (9, 109, 209) comporte un rebord de retenue (10, 110, 210) en matériau souple élastique, qui, au moins par zones, s'étend vers l'intérieur et dépasse de l'ouverture (7).

2. Mélangeur d'aliments pour animaux selon la revendication 1, **caractérisé en ce que** le rebord de retenue (9, 109, 209), au moins par zones, s'étend suivant un angle (α) situé entre 10° et 50°, de préférence entre 20° et 40°, de préférence de 25° à 35° et plus spécialement de 30° par rapport à la verticale (V).

3. Mélangeur d'aliments pour animaux selon la revendication 1 ou 2, **caractérisé en ce que** le rebord de retenue (10, 110, 210) s'étend avec une forme annulaire autour de l'ouverture (7).

4. Mélangeur d'aliments pour animaux selon l'une des revendications 1 à 3, **caractérisé en ce que** le rebord de retenue (10, 110, 210) contient plusieurs sections (1101, 1102) qui sont reliées entre elles par des moyens de compensation de mouvement (Ü, 117).

5. Mélangeur d'aliments pour animaux selon l'une des revendications 1 à 4, **caractérisé en ce que** le rebord de retenue (10, 110) est conçu comme une bande lisse.

6. Mélangeur d'aliments pour animaux selon l'une des revendications 1 à 5, **caractérisé en ce que** le rebord de retenue (210) est conçu comme une bande profilée.

7. Mélangeur d'aliments pour animaux selon l'une des revendications 1 à 6, **caractérisé en ce que** le rebord de retenue (10, 110, 210), au moins par zones, a la forme d'une aire latérale de cône.

8. Mélangeur d'aliments pour animaux selon l'une des revendications 1 à 7, **caractérisé en ce que** le rebord de retenue (210) est conçu comme une bande profilée avec une première zone (210a) cylindrique et une seconde zone (210b) qui a la forme d'une aire latérale de cône.

9. Mélangeur d'aliments pour animaux selon l'une des revendications 1 à 8, **caractérisé en ce que** le rebord de retenue (10, 110, 210), au moins par zones, est supporté par un élément élastique (118).

10. Mélangeur d'aliments pour animaux selon l'une des revendications 1 à 8, **caractérisé en ce que** le rebord de retenue (10, 110, 210), dans la zone de son extrémité libre (110), est pourvu d'un dispositif de renforcement (119).

11. Mélangeur d'aliments pour animaux selon l'une des revendications 1 à 10, **caractérisé en ce que** le dispositif de retenue (9, 109, 209) comporte un dispositif de fixation (11, 111, 211) pour installer le rebord de retenue (10, 110, 210) sur la paroi de conteneur (6).

12. Mélangeur d'aliments pour animaux selon la revendication 11, **caractérisé en ce que** le dispositif de fixation (11, 111, 211) est conçu pour une disposition amovible du rebord de retenue (10, 110, 210).

13. Mélangeur d'aliments pour animaux selon la revendication 11 ou 12, **caractérisé en ce que** le dispositif de fixation comporte un dispositif d'emboîtement (13, 113) pour l'emboîtement du rebord de retenue (10, 110).

14. Mélangeur d'aliments pour animaux selon l'une des revendications 1 à 12, **caractérisé en ce qu'**il est prévu une surface de support (12, 112) qui est appliquée contre un côté du rebord de retenue (10, 110, 210).

15. Mélangeur d'aliments pour animaux selon la revendication 13 ou 14, **caractérisé en ce que** la surface de support (12, 112) s'étend suivant un angle (α) par rapport à la verticale (V).
